# EUROPEAN PATENT APPLICATION

(11) **EP 2 172 884 A1**
(43) Date of publication of application: **07.04.2010**
(21) Application number: 08305593.9
(22) Date of filing: 25.09.2008
(51) Int. Cl.: G06Q 10/00, G06F 17/30

(54) **Content item review management**

(71) Applicant: Motorola, Inc., Schaumburg, IL 60196 (US)
(72) Inventor: Picault Jerome, 75014 Paris (FR); Hobson Paola, Alton, HA GU34 2SQ (GB)
(74) Representative: Jepsen, René Pihl

(57) **Abstract**

A content item review management apparatus (101) comprises a data store (209) which stores review data and content item characteristics for previously reviewed content items. A content item is received for review and content item characteristics, such as keywords, are determined for the content item. A match processor (207) matches the content item characteristic with content item characteristics of previously reviewed content items and stored review data is extracted based on the comparison. Initial review data for the content item is generated based on the extracted review data and a transmitter (215) transmits the initial review data to the source. The invention may allow review data estimating manually generated review data to be automatically generated.

## Description

### Field of the invention

The invention relates to content item review management and in particular, but not exclusively, to content item review management for text documents.

### Background of the Invention

In recent years, knowledge engineering and associated data mining methods have become increasingly important and used in a variety of applications. Indeed, as technical solutions have become increasingly sophisticated, they have increasingly been used to replace or assist human processes.

In addition, the increased availability and access to large amounts of content has increasingly made human processing of such content impossible or impractical. Indeed, more and more knowledge systems involve the submissions of large volumes of content items that have to be reviewed before being further exploited. In fact, in many content management systems, human inputs in the form of reviews of content items are essential for the processing and management of the content and it is therefore desirable that such review systems increasingly can be based on automated processing.

For example, social network sites that allow users to upload content that may be accessed by other users tend to rely heavily on peer user reviews to manage, promote, reject, grade etc. user uploaded content.

As another example, text documents may be managed and controlled based on reviews made by a number of reviewers. For example, for a scientific publication system or in collaborative publishing websites, such as the ones dedicated to participatory journalism, reviews are used to determine how to process the text documents and e.g. whether to publish or reject them. Conference submission systems provide another example of an application that require significant numbers of text documents to be uploaded, reviewed and rejected or accepted for inclusion in a conference. It is desirable that such systems may increasingly be based on automated knowledge engineering to replace or facilitate human operations and processing.

Hence, an improved content item review management system would be advantageous and in particular a system allowing increased flexibility, facilitated operation, reduced complexity, compatibility with existing user processes and procedures, efficient review management and/or improved performance would be advantageous.

### Summary of the Invention

Accordingly, the Invention seeks to preferably mitigate, alleviate or eliminate one or more of the above mentioned disadvantages singly or in any combination.

According to a first aspect of the invention there is provided a content item review management apparatus comprising: a data store for storing review data associated with content item characteristics for previously reviewed content items; means for receiving a first content item for review from a source; means for determining a first content item characteristic for the first content item; matching means for matching the first content item characteristic with content item characteristics of previously reviewed content items; extraction means for extracting stored review data in response to the matching of the first content item characteristic with content item characteristics of previously reviewed content items; review means for generating initial review data for the first content item in response to the extracted review data; and a transmitter for transmitting the initial review data to the source.

The invention may provide an improved system for managing content item reviews and may in particular allow additional or improved review feedback. The system may in many embodiments provide automatically generated review feedback to an originator of the first content item immediately upon submission of the content item to the content item review management apparatus. The review data may be generated automatically based on a monitoring of previous reviews of content items and may thus automatically adapt the review feedback to reflect the general review characteristics for reviewers reviewing content items. Specifically, automated initial review feedback that may provide an estimation of the review that will be provided by a human reviewer can be automatically generated and fed back to a user immediately upon submitting the content item. The apparatus may use a learning approach based on previously reviewed content items to provide accurate, adaptable and low complexity generation of initial review data without requiring any specific programming or characterisation of review characteristics.

The review data may be associated with content item characteristics and stored as a function of content item characteristics. Alternatively or additionally, the review data may be stored with a link to specific content items.

According to another aspect of the invention, there is provided a method of content item review management comprising: storing review data and content item characteristics for previously reviewed content items; receiving a first content item for review from a source; determining a first content item characteristic for the first content item; matching the first content item characteristic with content item characteristics of previously reviewed content items; extracting stored review data in response to the matching of the first content item characteristic with content item characteristics of previously reviewed content items; generating initial review data for the first content item in response to the extracted review data; and transmitting the initial review data to the source.

These and other aspects, features and advantages of the invention will be apparent from and elucidated with reference to the embodiment(s) described hereinafter.

### Brief Description of the Drawings

Embodiments of the invention will be described, by way of example only, with reference to the drawings, in which
FIG. 1 is an illustration of an example of a content item review management system in accordance with some embodiments of the invention;
FIG. 2 is an illustration of an example of a content item review management apparatus in accordance with some embodiments of the invention; and
FIG. 3 is an illustration of an example of a method of content item review management in accordance with some embodiments of the invention.

### Detailed Description of Some Embodiments of the Invention

The following description focuses on embodiments of the invention applicable to a content item review management apparatus for review of text based documents, such as scientific articles for technical publications or conferences. However, it will be appreciated that the invention is not limited to this application but may be applied to many other types of content items and review systems including for example systems for peer review of content uploaded to social network repositories, such as video upload sites.

Thus, the description focuses on a system to which users can submit document proposals. In this context, a document proposal can for example refer to a research paper submission, news articles sent by free lance journalists to a news agency, or any other kind of document submitted to a system which is characterized by a large set of contributors/authors and acceptance of the document being based on reviews (which specifically may be peer reviews).

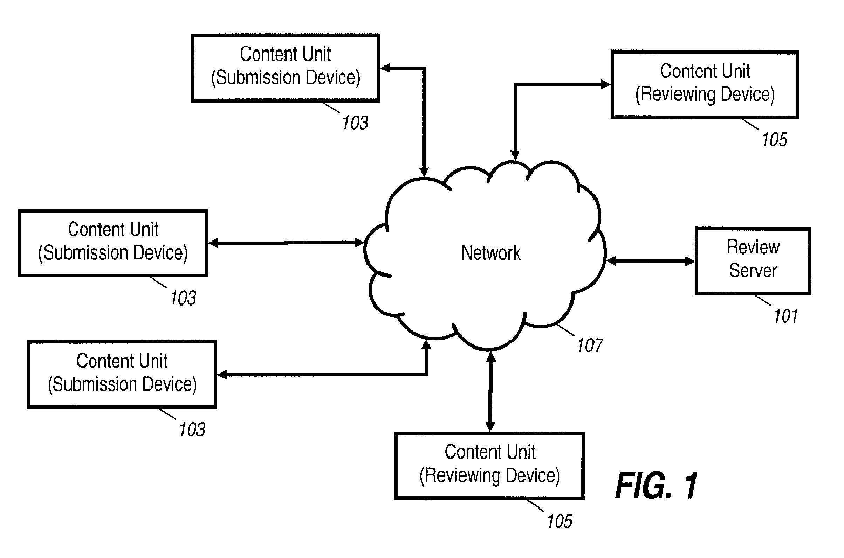

FIG. 1 illustrates an example of a content system for text document content items. The system comprises a review server 101 which is coupled to plurality of content units 103, 105 via a network 107 that specifically may be the Internet. In the example, some of the content units 103 are submission devices used to submit text documents for reviews whereas other content units 105 are review devices used to receive text documents for reviews and to provide the reviews to the review server 101. However, it will be appreciated that in other embodiments or scenarios, the same units may be used both for submitting content items and for review of content items.

In the system, the review server 101 receives text documents (or e.g. user generated video clips or music clips in other embodiments) from content units 103 and automatically generates initial review data for the submitted documents based on review data and content characteristics of previously reviewed content items. The initial review may be generated immediately when the text document is received and thus a submitter can be provided with an initial review immediately upon submitting a text document. Thus, the submitter need not wait for a manual review but can be provided with an initial review feedback that can be followed up later with a full manual review. The review server 101 may furthermore control submission of the text documents to appropriate review content units 105, receiving of review data from these review content units 105, and the forwarding of received reviews to appropriate content units 103. Furthermore, the review server 101 continuously updates the stored database of review data and content characteristics depending on the received review data, thereby allowing the review server 101 to automatically adapt and improve the provided automatically generated initial review data.

Thus the review server 101 provides a means for submitters to receive immediate feedback on e.g. the likelihood of success of acceptance of the submitted document. In the specific example, this may be achieved through the use of semantic analysis of the submission with respect to a database of previous submissions stored together with associated review data. Specific rules or algorithms can be applied to the new submission in order to identify and assist the submitter in finding possible areas of the submission needing further attention or improvement. In addition, by analysing past submissions by the same submitter, their personal areas of weakness may e.g. be identified, leading to provision of advice personalised to each submitter indicating how they may improve their personal characteristics.

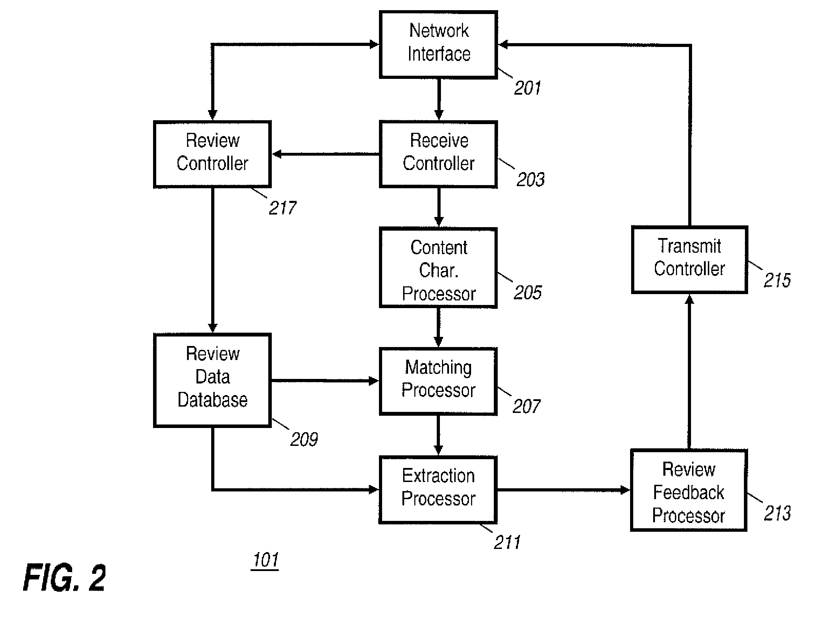

FIG. 2 illustrates the review server 101 in more detail. The review server 101 comprises a network interface 201 which interfaces the review server 101 to the network 107. In the specific example, the network interface 201 is an Internet interface.

The review server 101 further comprises a receive controller 203 coupled to the network interface 201. The receive controller 203 can receive content items, and specifically text documents from the content units 103. In the example, each text document is provided in a standardized format comprising a number of fields including the content itself as well as optionally metadata further characterizing the text document. Thus, a data file may be received specifying a title, keywords summarizing the document; a body text that can include e.g. drawings, formulae, diagrams, photos or pictures etc. In some cases the file may also include context characterising data such as time of origin, a genre etc.

The receive controller 203 is coupled to a content characterising processor 205 which is arranged to generate a content item characteristic for the received content item. It will be appreciated that in some scenarios, the content characterising processor 205 may simply extract data from the received file, such as e.g. the title, keywords and optionally the context data. In other embodiments, the content characterising processor 205 may be arranged to perform a content analysis on the received content in order to generate a suitable content characteristic.

It will be appreciated that the content item characteristic need not be a single parameter but rather may be a combined content characteristic indicative of a plurality of parameters and/or characteristics of the content item. Thus, the content item characteristic may be a data set characterising the content item, e.g. by data describing keywords, the genre, the length etc. Equivalently, it will be appreciated that the content characteristic may be a plurality of content characteristics.

In the specific example, the content characterising processor 205 is arranged to perform content analysis on the received content to generate the content characteristic(s).

Specifically, the received text document may be analysed in a plurality of steps including an initial global analysis of the submission, followed by a fine-tuned analysis of the submission based on review evaluation criteria. In the example of a text document, a semantic analysis is applied. This may specifically include the following steps for extracting keywords from the text document:
1. First, the text is divided into tokens (each comprising one or more words).
2. Then a lexicon, such as Wordnet, may be used to find synonyms in order to reduce the total number of keywords (e.g. the terms "diverse" and "varied" may be combined into a single keyword group).
3. In some scenarios stemization may be used to group together words or nouns that have the same etymology.
4. In addition, stop words (predefined words to be discarded) are used to remove common words that are widely used.
5. Steps 1-4 generate a set of keywords from which the most important words may be selected. One method for this is to use TF-IDF (Term Frequency-Inverse Document Frequency) values to rank the keywords. The TF-IDF value is a statistical measure used to evaluate how important a word is to a document in a collection or corpus (collection of suitable training documents) of documents. The Term Frequency indicates the frequency of the term in the current document and the Inverse Document Frequency indicates the reciprocal of the frequency of documents including the term in the corpus. The importance of a term increases in proportion to the number of times the term appears in the document but is offset by the frequency of the word in the corpus. In the specific example, the corpus considered may correspond to the collection of previously submitted documents (e.g. that have been accepted).
6. The content characterising processor 205 then applies a threshold for the TF-IDF value to select the most relevant keywords. The obtained final set of keywords thus provides a description of the text content, and can specifically provide a characterization of the topic of the text document.

In other embodiments, other content analysis techniques may be used. For example, for a video upload service with peer review, an automated video content analysis may be applied.

The review server 101 further comprises a matching processor 207 which is coupled to the content characterising processor 205 and to a review database 209. The review database 209 stores review data and content item characteristics for (at least some) previously reviewed content items.

The review database 209 may for example store a data set for each (qualifying) previously reviewed content item containing both review data and content characterising data for the content items. E.g. for a text document that has previously been reviewed, a data set may be stored which contains the keywords extracted from the text documents as well as any associated context data. The data set may furthermore comprise some or all of the review data that has been provided from a reviewing device 105 for the text document. This review data may specifically indicate whether the text document was approved or rejected, a grade for the text document (e.g. for student assignment based systems), etc. The review data may furthermore include data describing positive or negative evaluations for specific characteristics, such as a length, the number of equations, the number of drawings etc.

The review database 209 will in the specific example store a potentially large number of data sets where each data set corresponds to one previously reviewed content item. In other embodiments, the structure of review data and content characterising data may be different and may in particular not be stored for each individual content item. For example, in some embodiments, the review data and content characterising data may be combined and stored as direct associations between content characterising data and review data. For example, the review database 209 may store a number of content characteristics and an associated indication of a probability of acceptance of the content item for each of the content characteristics. For example, data may be stored which indicates that the chance of acceptance is higher for content items having a length within a given interval than for lengths outside this interval.

The matching processor 207 receives the content characterising data for the received content item (specifically the keywords) from the content characterising processor 205 and proceeds to match the characteristics for the received content item to characterising data in the review database 209. For example, the matching processor 207 may scan through the data stored in the review database 209 to detect stored previously reviewed content items that have characterising data considered sufficiently close to that of the current content item.

As a low complexity example, the matching processor 207 may scan the review database 209 and identify all stored data sets having more then a given number of keywords in common with the currently considered text document.

The review server 101 further comprises an extraction processor 211 coupled to the matching processor 207 and the review database 209. The extraction processor 211 receives an indication of the selected content items from the matching processor 207 (e.g. the content items that have more than a given number of keywords in common with the current text document). The extraction processor 211 then proceeds to extract the review data from the stored data sets of the selected content items. This review data is fed to a review feedback processor 213 which proceeds to generate initial review data for the current content item based on the extracted review data.

The extracted review data may be processed differently in different embodiments. For example, in some embodiments, the extracted review data may be compared and the most common review values may be identified and included in the initial review data. As another example, extracted review data for a number of predefined review categories (e.g. rating, vocabulary etc) may be averaged and the resulting averaged values may be included in the initial review data. As a simple example, the extracted review data may simply correspond to an indication of whether the previously reviewed content items were accepted or rejected. The review feedback processor 213 can then determine the percentage of similar content items that were accepted and include this percentage as an indication of the probability that the current content item will be accepted.

The review feedback processor 213 is coupled to a transmit controller 215 which is further coupled to the network interface 201. The transmit controller 215 is fed the initial review data, and in response it generates a feedback message containing the initial review data and transmits it to the content unit 103 that submitted the content item.

Thus, the system may allow an automatic generation of initial review data that can be returned to the originating content unit 103 immediately upon submission of the content item. For example, an author or student may submit a text document (such as an assignment) to the review server 101 and may immediately receive a confirmation that the text document has been received with the confirmation providing additional estimated review data, such as an estimated probability that the text document will be approved by a reviewer.

The review server 101 furthermore comprises a review controller 217 that is operable to control the transmission of content items to review devices 105 and to receive review data back from the review devices 105.

The review controller 217 is coupled to the receive controller 203 and the network interface 201 and receives the content item from the receive controller 203 and transmits it to one or more reviewing devices via the network interface 201.

Furthermore, the review controller 217 receives review items back from the review device 105. Thus a reviewer may receive the content item via the review device 105 and use this to provide his review feedback. The review data may specifically be provided in a predefined format which includes a number of specific data fields for specific categories. For example, one data field may be used to define whether the reviewer recommends the text document for acceptance or rejection, the rating or grade given by the reviewer for the content item as a whole, the ratings or grades given by the reviewer for specific elements of the content item, such as the use of figures etc. Alternatively or additionally, the review data may include a free form data field wherein the reviewer may enter text based review comments.

When the review item containing the manually generated review data is received from the review device 105, the review controller 217 forwards the review data to the content unit 103 originally submitting the content item. Thus, the submitter receives the full reviewer generated feedback whenever this is ready and provided by the reviewer.

The review controller 217 furthermore proceeds to update the data stored in the review database 209 in response to the received review items. Specifically, the review controller 217 may generate a new data set for the content item which includes the content item characteristics generated by the content characteristic processor 205 as well as the received review data for the content item. The generated data set may then be stored in the review database 209.

As another example, review data may be stored together with a specific content characteristic common for a plurality of content items. For example, a probability of the document being accepted may be stored as a function of a length of the document. Thus, a plurality of content items may be evaluated to estimate a probability of acceptance as a function of document length.

In such examples, the review controller 217 may upon receiving a review item scan the review database 209 to identify content characteristics that are similar to a content characteristic for the content item of the recently received review data. For example, the length of the current document may be determined and the review database may be scanned to determine an entry corresponding to that document length. The review data stored for the matching content parameter (e.g. the document length) is extracted and the corresponding review data for the current content item is used to modify the stored review data. For example, if the current document is approved, the stored probability of acceptance for text documents of that length is increased and otherwise it is reduced. The modified review data is then stored in the review database 209.

In the specific example, the previous review data is stored as a data set for each previously reviewed content item where the data set comprises review data and content item characterising data. Thus, a large number of content item data sets may be stored in the review database 209 with each set corresponding to a previously reviewed content item.

Furthermore, in the example, clustering techniques are used for storing the review data and for matching new content items to the stored data. Thus, the review controller 217 may at regular intervals cluster the stored data sets into content item clusters.

The clustering may for example be performed using clustering algorithms such as K-Means, X-Means, etc. which will be known to the skilled person. In the specific example, the clustering may only be based on similarities between extracted keywords for the text documents for which review data has been stored.

A clustering algorithm may generally attempt to minimize a criterion such as a distance measure, between the data sets. In the current invention, the clustering algorithm attempts to minimize the distance between keywords' descriptions for content items belonging to the same cluster.

For example the K-means clustering algorithm initially defines k clusters with given initial parameters. The content item characteristics of the previously reviewed content items are then matched to the k clusters. The parameters for each cluster are then recalculated based on the content item characteristics of content items that have been assigned to each cluster. The algorithm then proceeds to reallocate the content items to the k clusters in response to the updated parameters for the clusters. If these operations are iterated a sufficient number of times, the clustering converges resulting in k groups of content items having similar properties.

In some embodiments, more advanced techniques, such as fuzzy clustering in which each point has a degree of belonging to clusters, may be used.

Once the clustering has been performed, a cluster content item characteristic is determined for each of the content item clusters based on the content item characteristics of the content items that are included in the content item cluster. The cluster content item characteristic may specifically be determined as a set of keywords such as e.g. all keywords that are common for more than a threshold number of content items of the cluster.

Furthermore, the matching of the current content item to stored data is performed by comparing the content characteristic for the current content item to the stored cluster content item characteristics. In particular, the keywords for the current text document are compared to the keywords for each cluster. One or more clusters are then selected. For example, all clusters having more than a predetermined number of keywords in common with the current document (or the cluster having the most keywords in common) may be selected.

Thus, based on these extracted keywords for the current document, the matching processor 207 calculates a similarity with existing clusters of past submissions in order to find one or more matching clusters. The similarity can be calculated as the cosine measure between the vector of keywords describing the current text document and the vector of keywords describing the cluster.

Once a suitable cluster has been identified, the extraction processor 211 proceeds to extract the review data for the cluster. For example, the review data stored for all content items belonging to the cluster may be extracted.

The extracted review data is then used by the review feedback processor 213 to generate the initial review data. Thus, the review data provided for a number of previously submitted content items with characteristics similar to the current content item can automatically be used to generate review data for the current content item. As a low complexity example, an averaging of review data values for the content items of the selected cluster can be determined as initial review data. This may e.g. provide the submitter with an estimate of a possible rating of the submitted text document by providing the average rating of very similar content items. As another example, the percentage of content items in the cluster that have been selected may be used to estimate the probability of the current document being accepted.

The use of a clustering approach allows an efficient learning system that automatically adapts and structures itself to the specific content items submitted and reviewed, and provides a highly efficient approach for matching the current content item to review data for similar content items.

In some embodiments, the matching processor 207 may also determine a match measure that is indicative of how close the similarity between the content item characteristic of the current document is to the selected matching content items. This value may be fed to the review feedback processor 213 which proceeds to take this into account when generating the initial review data.

Specifically, the matching processor 207 can calculate a similarity value reflecting how close to the selected cluster, the current content item is. E.g. if the distance to the centroid of the cluster is high, this indicates that the current content item has a loose connection to that cluster. This may for example be used to generate initial review data which contains a message to the submitter highlighting that the topic of the text document is very different to past submissions (This could e.g. for a conference review system indicate that the submitted article does not fit any topic that is expected for submissions to the conference).

In some embodiments, the review server 101 may be arranged to determine a set of desired content item characteristics in response to the extracted stored review data. For example, it may be detected that higher ratings are achieved for a number of figures that fall within a specific interval whereas more or less than this number of figures tend to reduce the rating given by reviewers. The corresponding characteristics of the received content item can be compared to these desired characteristics and the initial review data may include feedback that indicates if the desired characteristic has not been met. E.g. the initial feedback may indicate that the submitted content item has more (or less) figures than are typically preferred.

In some embodiments, the review server 101 may track a user identity for the received content items and may generate a common content characteristic for a plurality of content items received from the same user identity. For example, the number of figures typically included in text documents submitted by a specific user may be determined. If the common characteristic does not meet the desired characteristics, the initial feedback data may include an indication thereof. For example, review data may be generated which includes a hint or suggestion such as "Your submissions tend to have fewer figures than seem to typically be preferred. Consider adding more figures in the future".

Thus, the review server 101 may assist in identifying and commenting on recurrent weaknesses of the user based on the analysis of past submissions. This can be used in several ways. E.g. if the acceptance rate is fairly low for the specific user, direct warnings on the part that should require particular attention can be provided. In addition, the approach can also be used in conjunction with the statistical analysis to confirm or weaken the risks already identified.

One possible method is the use of linear regression (or more complex regression methods) on the various evaluation criteria. An advantage of this method is that it takes into account the evolution of the user as it uses past experiences (previous submissions) as data to build the model.

The review server 101 of FIG. 1 specifically uses machine learning and clustering techniques to help users in the preparation of their submission. Thus, the initial review data can be provided to the submitter immediately upon submission of the document. The server 101 may furthermore include an update facility that allows the submitter to improve the text document in response to the initial feedback.

The described approach obviates the need for defining specific metrics, rules and outcomes of the process while allowing a quick initial estimation of the review to be generated. The feedback can e.g. be provided in the form of a colour coded response: green light meaning that the review server 101 has no comments; yellow light accompanied by suggestions indicating where the submitter may consider changes (e.g. "The body of the document does not contain any diagrams. Would you like to add one now?"); and red light to indicate serious possible errors (e.g. "Your submission contains very few paper references. It is recommended that you review this section and add to it where possible").

In some embodiments, the review controller 217 may furthermore be arranged to assist in the identification of suitable reviewers for a given content item. Thus, in some embodiments, the content item may be sent to all content units 103, 105 in order to allow everybody to provide review feedback (this may e.g. be suitable for social network upload applications based on peer reviews). However, in the specific example, a specific group of reviewers are selected and the content item is only forwarded to reviewing devices 105 associated with reviewers of that group.

Specifically, each review item received may be associated with a reviewer identity. This may e.g. be included explicitly in the received review data (e.g. manually entered by a reviewer) or may simply correspond to the address of the reviewing device from which the review item is received (i.e. it may be assumed that a reviewer always uses the same reviewing device and that there is only one reviewer for each reviewing device 105).

The review controller 217 may then proceed to generate a reviewer identity profile for each reviewer identity. The reviewer identity profile is determined in response to the content item characteristics and/or the received review data for the content items for which the specific reviewer identity has provided review items.

Thus, in the system, each reviewer is represented by a reviewer identity and a reviewer identity profile. A reviewer identity profile describes the characteristics of a reviewer, such as which areas/topics he is specifically suited to review.

The reviewer characteristics can be either: declared or inferred:
*Declared characteristics:* These are explicit and manually input data characterising the reviewer. For example, a reviewer may enter his areas of expertise manually. The declared characteristics may belong to a form of ontology or taxonomy in order to facilitate the flexible match of a reviewer profile. Declared characteristics may typically be useful for describing high level characteristics of a reviewer.
*Inferred* characteristics: These characteristics may be derived from previous reviews of content items by the reviewer. For example, the reviewer identity profile may contain a list of weighted keywords extracted from keywords of text documents that have previously been reviewed by the reviewer. Alternatively or additionally, keywords from previous review data may be extracted and included. Inferred characteristics may often provide a more detailed characterisation than the declared characteristics.

For a given content item, the review controller 217 may then proceed to select one or more suitable reviewer identities by evaluating the content item characteristics and the reviewer identity profiles. When a suitable reviewer identity profile has been found, the review controller 217 retrieves the address of the reviewing device 105 that is associated with the corresponding reviewer identity and proceeds to transmit the content item to that address.

When the review data is received from the selected reviewer, it is forwarded to the content unit 101 that submitted the content item. Thus, the submitter receives initial review data immediately upon submission of a content item, and receives further review data from a suitable reviewer when this is provided by the reviewer. Thus, the system provides both an immediate automatically generated estimate of review data as well as managing and controlling the distribution of the content item and manually provided review data allowing the submitter to be provided with full review data as soon as this is available.

In addition, the review controller 217 proceeds to update the reviewer identity profile for the reviewer identity when the review data is received back from the reviewer. In particular, the content item characteristics and/or review data may be evaluated to generate an inferred reviewer identity characteristic which can be included in the reviewer identity profile or used to modify this.

Different approaches can be used to match content items and reviewers. For example, keyword matching can be used to match the keywords extracted from the current content item to keywords stored in the reviewer identity profile as representing frequently occurring keywords for previously reviewed content items. Alternatively or additionally, the reviewer identity profile can define a number of topics associated with different reviewers and a topic may be estimated for the content item. Reviewers for which the reviewer identity profile identifies a topic that matches that of the content item may then be provided with the content item for review. This may specifically result in a selection of reviewer identities for which the content characteristics data of the reviewer identity profile and content item characteristic of the current content item meet a similarity criterion.

In addition, the selection of reviewers can take into account additional criteria, such as work load of best matching reviewers, can be interconnected with a shared agenda system, etc.

In some scenarios, the review server 101 may also track user identities and generate a user identity profile. Thus, whenever a content item is received from a given user identity, the user identity profile for that identity is modified (or a new one is generated). For example, the keywords of the content item may be added to the user profile with a weight that depends on the outcome of the review, i.e. on whether the document is accepted or rejected. Thus, a positive weight may be used if the proposal is accepted and a negative weight may be used otherwise. The user identity profile may also contain an indication of how many content items have been submitted and e.g. the topics to which they relate.

In some embodiments, the review server 101 may then be arranged to evaluate the user identity profiles and to generate a reviewer identity corresponding to the user identity if the user identity profile for the user meets a given criterion. For example, if more than a given number of content items have been submitted and been approved, the user may automatically be registered as a potential reviewer. Thus, if a content item submission criterion is met for a given user identity, that user identity may also be registered as a reviewer identity. Thus, an active user may automatically be allowed to become a reviewer.

The reviewer identity profile for a user being proposed as a reviewer can automatically be generated from the content items that have been submitted by the user identity. Specifically, the keywords stored in the user identity profile can directly be included in the reviewer identity profile.

Thus, in some embodiments new reviewers can be automatically selected from the pool of submitters according to some simple rules, such as for example:
number_submissions (X) >threshold_{submissions}
& success_rate(X)>threshold_{success}
=> become_reviewer(X)

Such an approach may ensure the availability of highly qualified reviewers in the system through a dynamic evolution of user roles in the system.

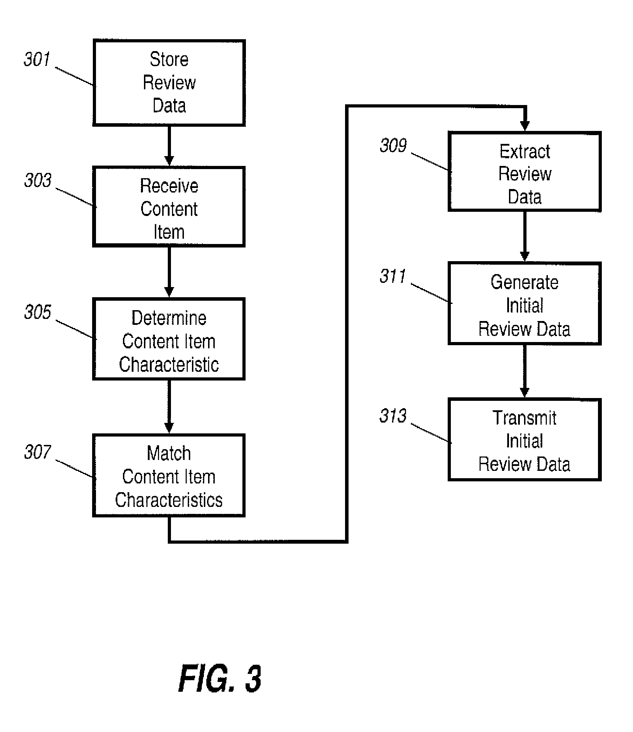

FIG. 3 illustrates a method of content item review management in accordance with some embodiments of the invention.

The method initiates in step 301 wherein review data and content item characteristics for previously reviewed content items are stored.

Step 301 is followed by step 303 wherein a first content item for review is received from a source.

Step 303 is followed by step 305 wherein a first content item characteristic is determined for the first content item.

Step 305 is followed by step 307 wherein the first content item characteristic is matched with content item characteristics of previously reviewed content items.

Step 307 is followed by step 309 wherein stored review data is extracted in response to the matching of the first content item characteristic with content item characteristics of previously reviewed content items.

Step 309 is followed by step 311 wherein initial review data is generated for the first content item in response to the extracted review data.

Step 311 is followed by step 313 wherein the initial review data is transmitted to the source.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

## Claims

1. A content item review management apparatus comprising:
a data store (209) for storing review data and content item characteristics for previously reviewed content items;
means (203) for receiving a first content item for review from a source;
means (205) for determining a first content item characteristic for the first content item;
matching means (207) for matching the first content item characteristic and content item characteristics of previously reviewed content items;
extraction means (211) for extracting stored review data in response to the matching of the first content item characteristic and content item characteristics of previously reviewed content items;
review means (213) for generating initial review data for the first content item in response to the extracted review data; and
a transmitter (215) for transmitting the initial review data to the source.

2. The content item review management apparatus of claim 1 further comprising:
review receiving means (217) for receiving review items for content items, each review item being associated with a reviewer identity;
profile means (217) for determining reviewer identity profiles, the reviewer identity profile for a first reviewer identity being determined in response to at least one of a characteristic of the review items associated with the first reviewer identity and characteristics of a content item for which a review item associated with the first reviewer identity is received; and
selection means (217) for selecting a first reviewer identity for the first content item in response to the first content item characteristic and the reviewer identity profiles.

3. The content item review management apparatus of claim 2 wherein the profile means (217) is arranged to update a reviewer identity profile associated with a reviewer identity of a review item received for the first content item in response to the first content item characteristic.

4. The content item review management apparatus of claim 2 further comprising means (217) for transmitting the first content item to a destination address associated with the first reviewer identity; means (217) for generating further review data for the first content item in response to a first review item received for the first content item; and wherein the transmitter (215) is arranged to transmit the further review data to the source.

5. The content item review management apparatus of claim 2 wherein the selection means (217) is arranged to select the reviewer identity as a reviewer identity for which content characteristics data of the reviewer identity profile and the first content item characteristics meet a similarity criterion.

6. The content item review management apparatus of claim 2 wherein at least some received content items are associated with a user identity; and means (217) for generating a reviewer identity corresponding to a first user identity if content items associated with the first user identity and received by the content item review management apparatus meet a content item submission criterion.

7. The content item review management apparatus of claim 6 further comprising means (217) for determining a reviewer identity profile in response to the content items associated with the first user identity.

8. The content item review management apparatus of claim 1 wherein review data for at least some content items comprises an indication of whether the content item is approved or rejected.

9. The content item review management apparatus of claim 8 wherein the initial review data comprises an indication of a likelihood of approval of the first content item.

10. The content item review management apparatus of claim 1 wherein the content items comprise text content items.

11. The content item review management apparatus of claim 1 further comprising means (205) for performing a content analysis on the first content item to generate the first content item characteristic.

12. The content item review management apparatus of claim 1 further comprising:
means for clustering the previously received content items into a plurality of content item clusters;
means for determining a cluster content item characteristic for each content item cluster in response to content item characteristics of content items comprised in the content item cluster; and wherein
the matching means is arranged to select a first content item cluster by comparing the cluster content item characteristics and the first content item characteristic;
the extraction means is arranged to extract stored review data for the first content item cluster; and
the review means is arranged to generate the initial review data in response to the extracted stored review data for the first content item cluster.

13. The content item review management apparatus of claim 1 wherein the matching means (207) is arranged to generate a match measure indicative of a similarity between the first content item characteristic and content item characteristics of previously reviewed content items associated with the extracted stored review data; and the review means (213) is arranged to generate the initial review data in response to the match measure.

14. The content item review management apparatus of claim 1 further comprising means for determining a set of desired content item characteristics in response to the extracted stored review data; and wherein the review means (213) is arranged to compare the first content item characteristic to the set of desired content item characteristics and to include an indication of a result of the comparison in the initial review data.

15. The content item review management apparatus of claim 1 further comprising:
means for determining a set of desired content item characteristics in response to stored review data;
means for determining a common content item characteristic for a plurality of content items associated with a same user identity;
and wherein the review means is arranged to compare the common content item characteristic to the set of desired content item characteristics and to include an indication of a result of the comparison in initial review data for the same user identity.

16. The content item review management apparatus of claim 1 further comprising means for storing review data for a reviewed content item as a data set comprising the review data and characterising data for the content item.

17. The content item review management apparatus of claim 1 further comprising
means for determining a common content item characteristic for plurality of previously reviewed content items;
means for determining content characteristic review data for the common content item characteristic in response to review data for the plurality of the previously reviewed content items; and
means for storing review data for the common content item characteristic as a data set comprising the content characteristic review data and the common content item characteristic.

18. A method of content item review management comprising:
storing (301) review data and content item characteristics for previously reviewed content items;
receiving (303) a first content item for review from a source;
determining (305) a first content item characteristic for the first content item;
matching (307) the first content item characteristic with content item characteristics of previously reviewed content items;
extracting (309) stored review data in response to the matching of the first content item characteristic with content item characteristics of previously reviewed content items;
generating (311) initial review data for the first content item in response to the extracted review data; and
transmitting (313) the initial review data to the source.
